# EUROPEAN PATENT APPLICATION

(11) **EP 4 253 110 A1**
(43) Date of publication of application: **04.10.2023**
(21) Application number: 23155974.1
(22) Date of filing: 10.02.2023
(51) Int. Cl.: B60J 5/10

(54) **MODULAR LEAF OR DOOR FOR A LOAD COMPARTMENT OF AN INDUSTRIAL VEHICLE AND RELATED ASSEMBLY METHOD**

(30) Priority: 30.03.2022 IT 202200006278
(71) Applicant: Takler S.r.l., 70022 Altamura (BA) (IT)
(72) Inventor: BARATTINI, Daniele, I-70022 Altamura, BARI (IT); GRECO, Luca, I-70022 Altamura, BARI (IT)
(74) Representative: Mitola, Marco

(57) **Abstract**

A modular leaf or door (4) comprising a plurality of modules (8) extending along a main longitudinal direction (X-X), the modules (8) being provided with head profiles (16) at least partially counter-shaped to each other, wherein at least one head profile (16") of a first module (8') comprises a pair of cantilevered flaps (20), mutually facing each other with respect to a transverse direction (Y-Y), and wherein at least one head profile (16") of a second module (8"), comprises a male portion (28) adapted to engage in said attachment volume (24). At least one of said cantilevered flaps (20) comprises a first fixing portion (32) having a plurality of ridges (36) and grooves (40) and facing the attachment volume (24), and wherein said male portion (28) comprises a second fixing portion (44), facing the first fixing portion (32) and adapted to obtain a shape coupling with the latter.

## Description

### FIELD OF APPLICATION

The present invention relates to a modular leaf or door for a load compartment of an industrial vehicle, and to the related assembly method.

### BACKGROUND ART

From the prior art there are several solutions of leaves and doors for load compartments of industrial vehicles.

These known solutions are usually in one piece, i.e., consisting of a single panel, and are thus made to measure, according to the height and width of the access to the load compartment of the vehicle.

The known solutions are thus expensive to make as they must be made to measure.

There are also solutions involving the manufacturing of leaves or doors in several adjacent modules connected to one another: these solutions include complex interlocking fixing systems and are not cheap to manufacture or easy to assemble.

### PRESENTATION OF THE INVENTION

Therefore, the need is felt to solve the drawbacks and limitations mentioned above with reference to the prior art.

Such a need is met by a modular leaf or door according to claim 1 and by an assembly method according to claim 10.

### DESCRIPTION OF THE DRAWINGS

Further features and advantages of the present invention will be more comprehensible from the following description of preferred embodiments thereof, given by way of non-limiting examples, in which:

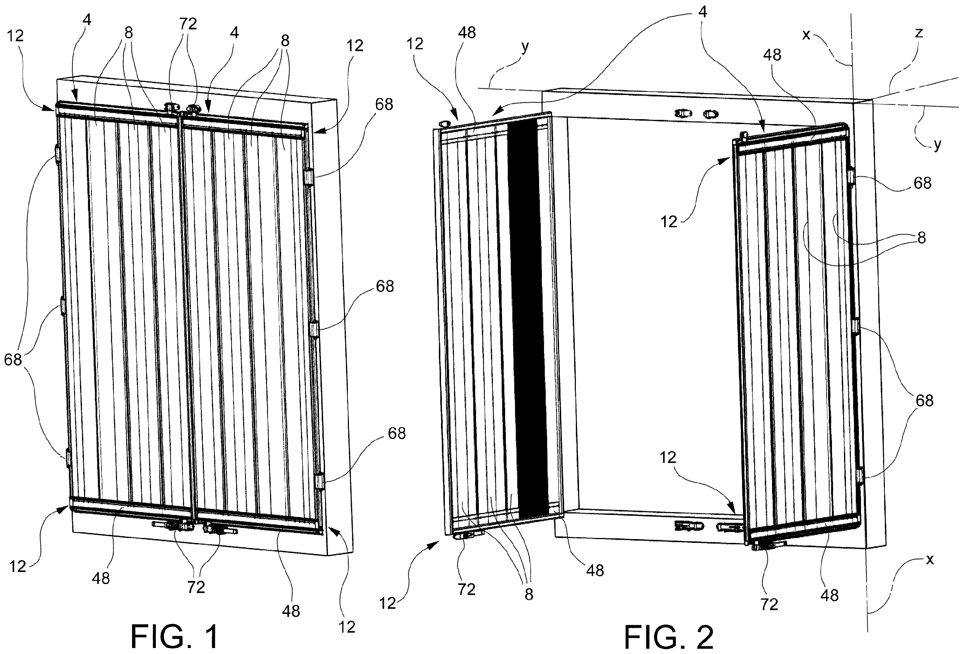

figures 1-2 are perspective views, in the closing and opening configurations, of modular leaves for a load compartment of a vehicle, according to an embodiment of the present invention;

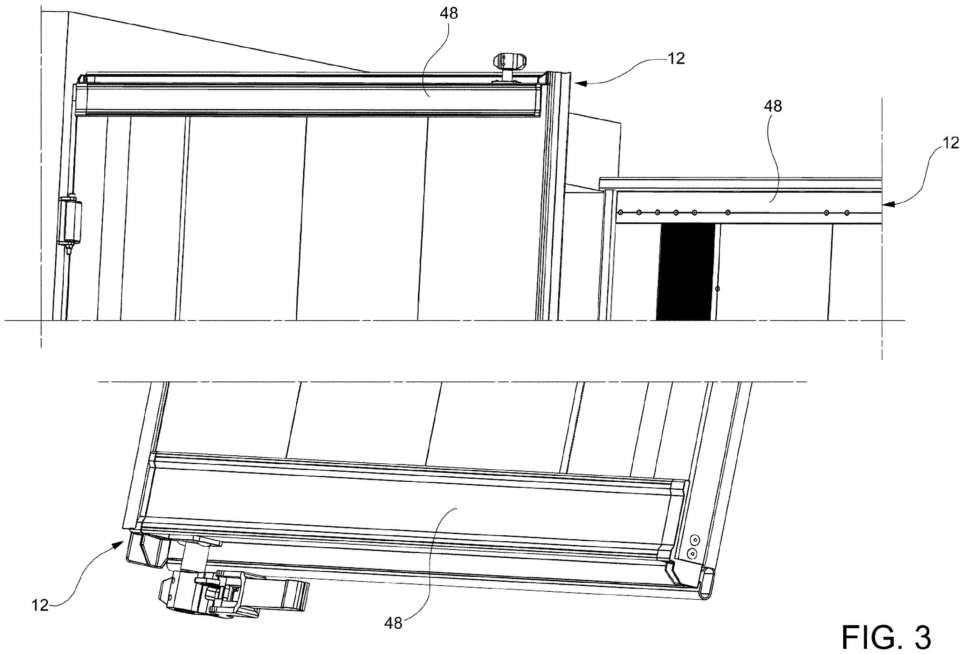

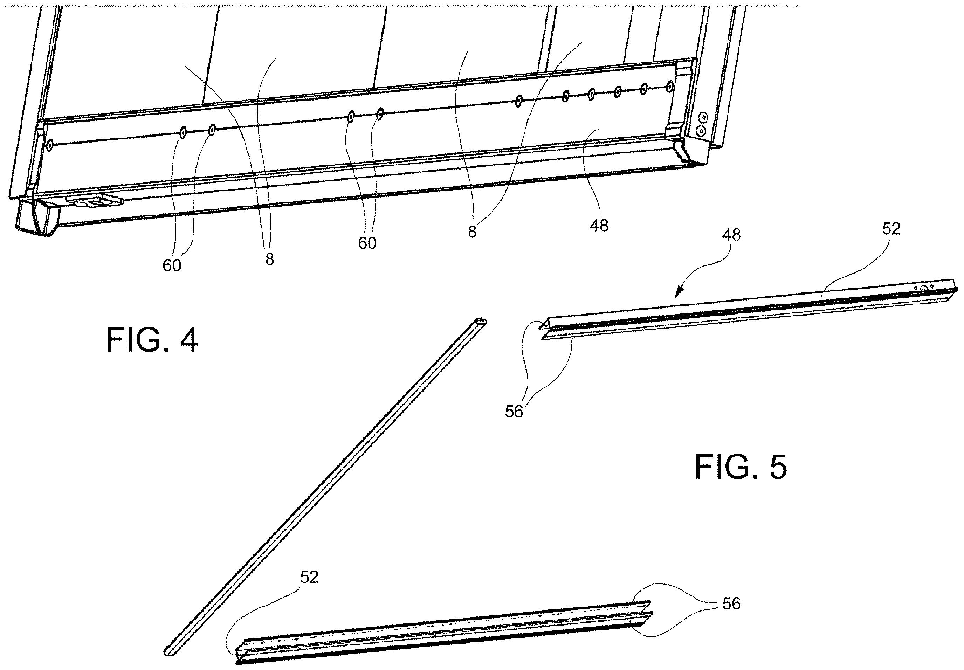

figures 3-5 are perspective views of enlarged details of the leaves in figures 1-2;
figures 6-11 are perspective views of subsequent steps for assembling a modular leaf according to the present invention.
The elements or parts of elements common to the embodiments described below will be indicated by the same reference numerals.

### DETAILED DESCRIPTION

With reference to the aforesaid figures, a modular leaf or door for a load compartment of an industrial vehicle is indicated as a whole by reference numeral 4.

The modular leaf or door 4 comprises a plurality of modules 8 extending along a main longitudinal direction X-X, between opposite longitudinal ends 12. Usually, the modular leaf or door 4 is arranged in a vertical position, i.e., perpendicular to the ground.

Preferably, said modules 8 are hollow elements provided with pairs of panels 10 connected by spacer ribs 11, for example directed along the main longitudinal direction X-X.

Said modules 8 are provided with head profiles 16 at least partially counter-shaped to each other; in particular at least one head profile 16' of a first module 8' comprises a pair of cantilevered flaps 20, mutually facing each other with respect to a transverse direction Y-Y perpendicular to said main longitudinal direction X-X so as to delimit an attachment volume 24.

Moreover, at least one head profile 16'' of a second module 8" adjacent to the first module 8' along said transverse direction Y-Y comprises a male portion 28 adapted to engage in said attachment volume 24.

According to a possible embodiment, said cantilevered flaps 20 are elastic along an axial direction Z-Z, perpendicular to the main longitudinal direction X-X and to the transverse direction Y-Y, so as to flex to accommodate said male portion 28.

At least one of said cantilevered flaps 20 comprises a first fixing portion 32 having a plurality of ridges 36 and grooves 40 and facing said attachment volume 24; moreover, said male portion 28 comprises a second fixing portion 44, facing the first fixing portion 32 and adapted to achieve a shape coupling with said first fixing portion 32.

For example, said first and second fixing portions 32, 44 are knurled portions.

According to a possible embodiment, said first and second fixing portions 32,44 comprise alternations of ridges 36 and grooves 40 parallel to said main longitudinal direction X-X.

It is also possible to conceive that said first and second fixing portions 32,44 comprise alternations of ridges 36 and grooves 40 parallel to a direction inclined with respect to the transverse direction Y-Y and the main longitudinal direction X-X.

The modular leaf or door 4 further comprises a pair of crosspieces below, arranged along the transverse direction Y-Y, and mechanically connected to said modules 8 at said longitudinal ends 12.

According to an embodiment, the crosspieces 48, with respect to a section plane perpendicular to said transverse direction Y-Y, exhibit a 'U' configuration having an edge 52 and a pair of branches 56 spaced from each other over a width at least equal to an axial thickness of said modules 8, measured along an axial direction Z-Z, perpendicular to the main longitudinal direction X-X and to the transverse direction Y-Y.

Preferably, the crosspieces 48 are fixed to the modules 8 by mechanical coupling means 60 such as screws, bolts or rivets.

According to a possible embodiment, the leaf or door 4 comprises a cover casing 64 of said mechanical coupling means 60.

At least one of said modules 8 is provided with hinges 68 defining a longitudinal hinge axis, parallel to said main longitudinal direction X-X.

At least one of said modules 8 is provided with opening/closing means 72 of the leaf 4.

The method of assembling a modular leaf or door according to the present invention will now be described.

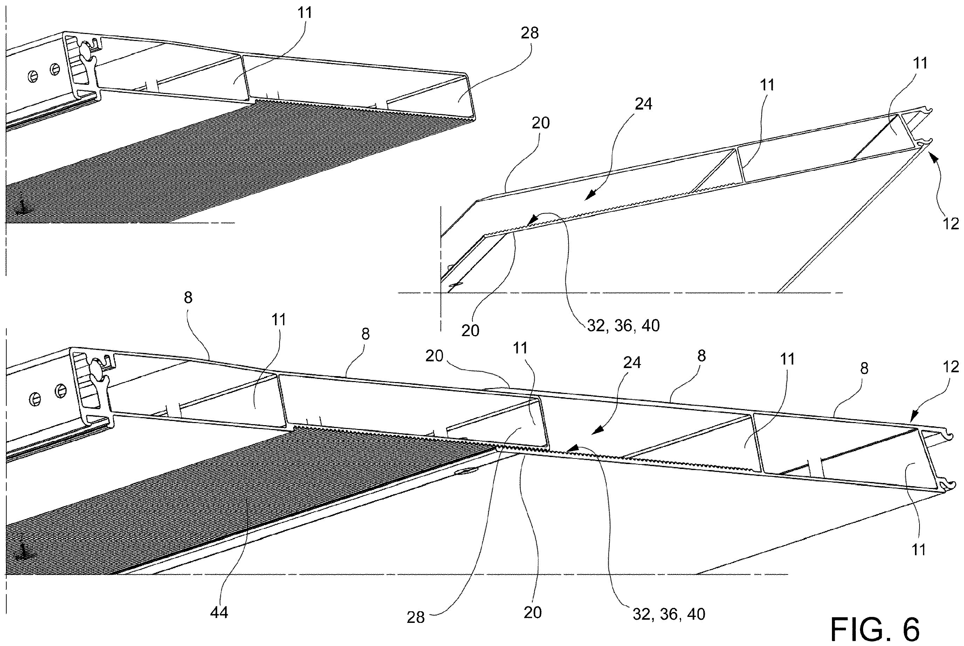

In particular, the step of arranging a plurality of modules 8 extending along a main longitudinal direction X-X, between opposite longitudinal ends 12, is performed, where said modules 8 are provided with end profiles 16 at least partially counter-shaped to one another. At least one head profile 16' of a first module 8' comprises a pair of cantilevered flaps 20, mutually facing each other with respect to the transverse direction Y-Y so as to delimit the attachment volume 24; at least one head profile 16'' of a second module 8" , adjacent to the first module 8' along said transverse direction Y-Y, comprises a male portion 28 adapted to engage in said attachment volume 24. At least one of said cantilevered flaps 20 comprises a first fixing portion 32 having a plurality of ridges 36 and grooves 40 and facing said attachment volume 24, while said male portion 28 comprises a second fixing portion 44, facing the first fixing portion 32 and adapted to achieve a shape coupling with said first fixing portion 32 (figure 6).

It is to be noted that it is necessary to cut said modules 8 in advance, as a function of the required height of the leaf or door 4, along the main longitudinal direction X-X, before mechanically associating them with one another.

Likewise, it is necessary to associate a number of said modules 8, according to the overall required width of the leaf or door 4, along the transverse direction Y-Y.

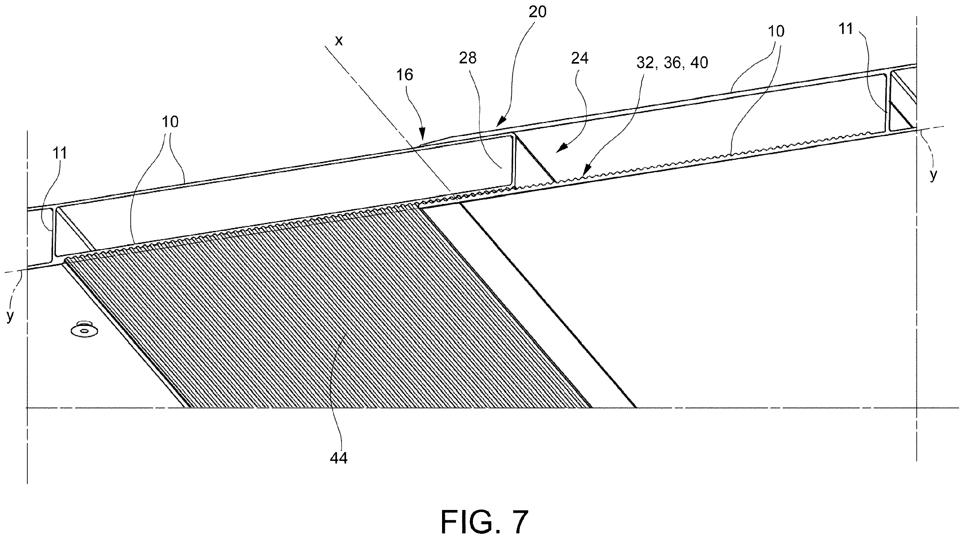

The step of engaging the male portion 28 into the attachment volume 24 is then performed, so as to obtain said shape coupling between the first fixing portion 32 and the second fixing portion 44 (figure 7).

It is worth saying that the step of engaging the male portion 28 into the attachment volume 24 can be carried out by approaching two modules 8',8'' parallel to said main longitudinal direction X-X, inserting the male portion 28 from the side of a longitudinal end 12 of the module delimiting the attachment volume 24. The shape coupling between the male portion 28 and the attachment volume 24 is thus utilized without the need to elastically deform the cantilevered flaps 20.

It is also possible to conceive that the step of coupling the male portion 28 inside the attachment volume 24 is carried out by approaching two modules 8', 8'' parallel to said transverse direction Y-Y. The elastic flexibility of the cantilevered flaps 20 is thus utilized.

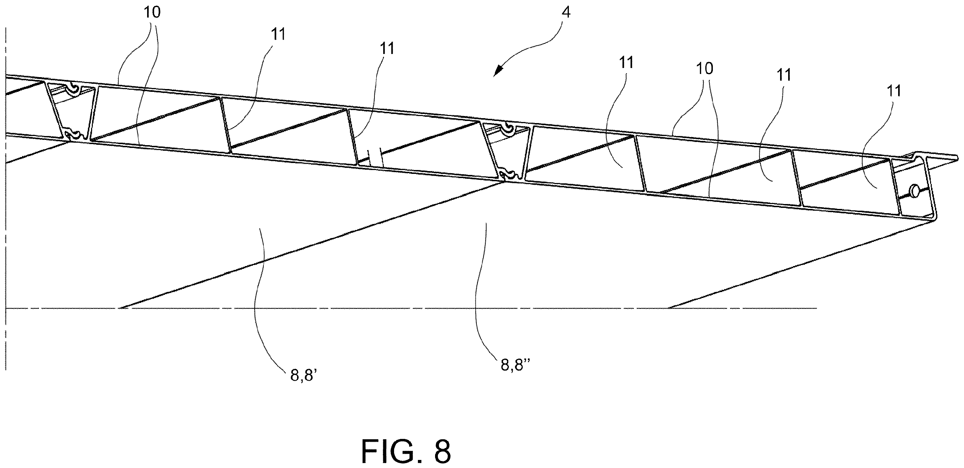

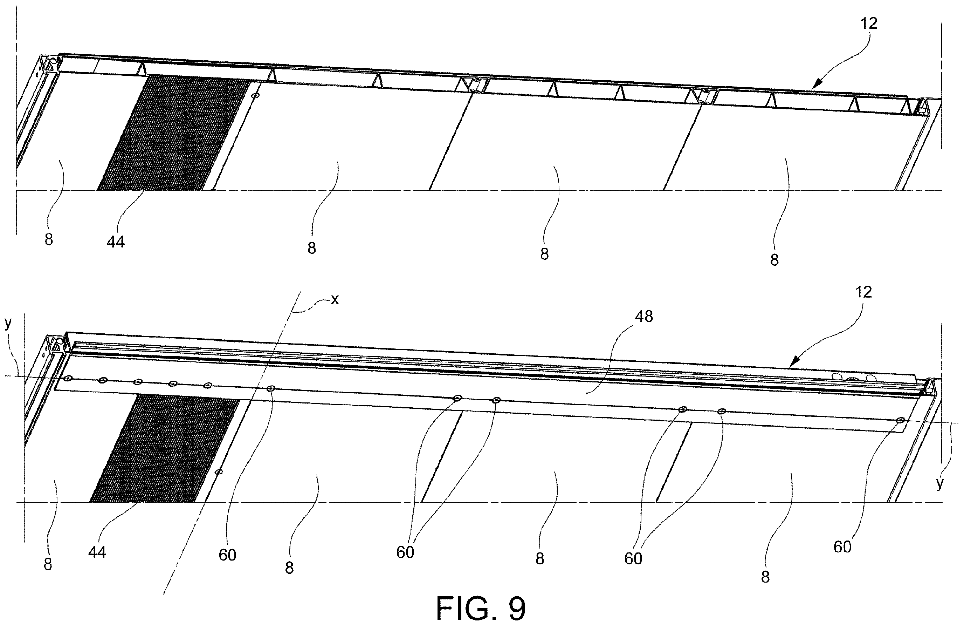

Once the assembly of the various modules 8 comprising the modular leaf or door 4 (figure 8) has been finished, there is the step of associating the pair of crosspieces 48, arranged along the transverse direction Y-Y, at said longitudinal ends 12 and fixing them mechanically to said modules 8 (figure 9).

It is to be noted that the step of cutting the crosspieces 48 to measure according to said total width of the leaf or door 4 should be included.

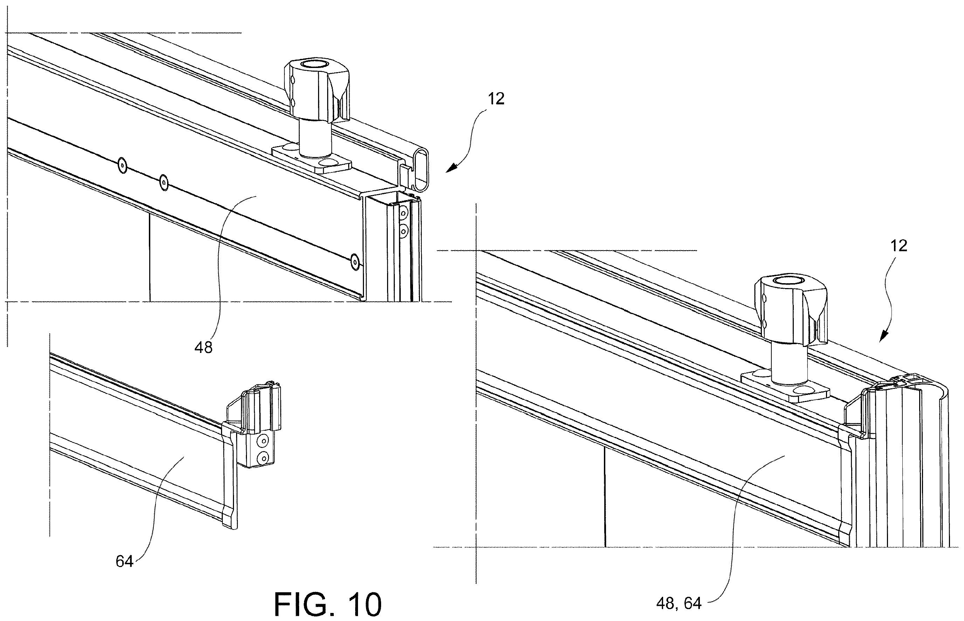

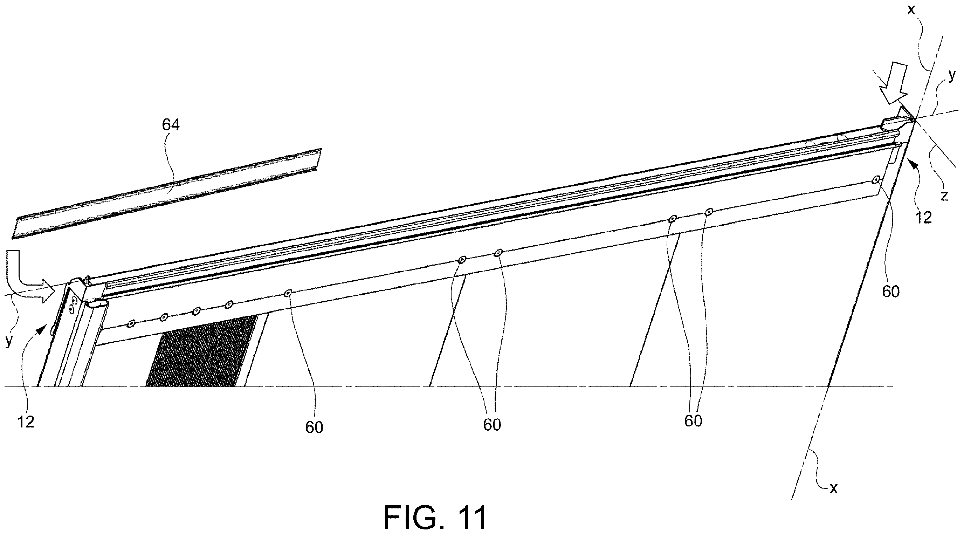

Finally, the method ends with the assembly of the cover casing 64 and any further caps (figures 10-11).

As can be appreciated from the description above, the present invention allows overcoming the drawbacks presented in the prior art.

In particular, the present invention allows obtaining the modularity of the components forming the leaf of the door.

In fact, the "telescopic" concept allows a variable choice of the width of the leaf, while using the same basic components, with the sole exception of the two upper and lower heads, which are simply cut according to the chosen width measurement.

A significant decrease in costs of tools and production processes is thus obtained.

Moreover, there is a dramatic reduction in the number of base components to be produced, but also to be coded and stored.

This leads to a dramatic simplification of the logistic and commercial management of the manufacturer: a single "package" covers all the possible widths for light commercial vehicles, and for a certain door height.

This also leads to a dramatic simplification of the logistical and commercial management of the final customer. In fact, the door is designed right from the start to be assembled "in house" or by the final customer who can receive the kit of components and therefore use common processes and tools.

Moreover, the use of a head profile without an inclined cut simplifies the actions of cutting the heads themselves to measure and makes the assembly of the door in situ by the final user easier.

The solution according to the present invention is particularly versatile: for example, it is possible to insert modules made of insulating material into the profiles, for specific applications.

In order to meet contingent, specific needs, those skilled in the art may make several changes and variations to the solutions described above.

The scope of protection of the invention is defined by the following claims.

## Claims

1. Modular leaf or door (4) for a load compartment of an industrial vehicle, comprising:
- a plurality of modules (8) extending along a main longitudinal direction (X-X), between opposite longitudinal ends (12),
- said modules (8) being provided with head profiles (16) at least partially counter-shaped to each other, wherein at least one head profile (16') of a first module (8') comprises a pair of cantilevered flaps (20), mutually facing each other with respect to a transverse direction (Y-Y) perpendicular to said main longitudinal direction (X-X) so as to delimit an attachment volume (24), and wherein at least one head profile (16'') of a second module (8"), adjacent to the first module (8') along said transverse direction (Y-Y), comprises a male portion (28) adapted to engage in said attachment volume (24),
- wherein at least one of said cantilevered flaps (20) comprises a first fixing portion (32) having a plurality of ridges (36) and grooves (40) and facing said attachment volume (24), and wherein said male portion (28) comprises a second fixing portion (44), facing the first fixing portion (32) and adapted to obtain a shape coupling with said first fixing portion (32),
- a pair of crosspieces (48), arranged along the transverse direction (Y-Y), and mechanically connected to said modules (8) at said longitudinal ends (12).

2. Modular leaf or door (4) according to claim 1, wherein said first and second fixing portions (32,44) are knurled portions.

3. Modular leaf or door (4) according to claim 1 or 2, wherein said first and second fixing portions (32,44) comprise alternations of ridges (36) and grooves (40) parallel to said main longitudinal direction (X-X).

4. Modular leaf or door (4) according to claim 1 or 2, wherein said first and second fixing portions (32,44) comprise alternations of ridges (36) and grooves (40) parallel to a direction which is inclined with respect to the transverse direction (Y-Y) and the main longitudinal direction (X-X).

5. Modular leaf or door (4) according to claim 1, 2, 3 or 4, wherein said cantilevered flaps (20) are elastic along an axial direction (Z-Z), perpendicular to the main longitudinal direction (X-X) and to the transverse direction (Y-Y), so as to be able to flex to accommodate said male portion (28).

6. Modular leaf or door (4) according to any one of claims 1 to 5, wherein the crosspieces (48), with respect to a section plane perpendicular to said transverse direction (Y-Y), have a 'U' configuration having an edge (52) and a pair of branches (56) spaced from each other for a width at least equal to an axial thickness of said modules (8), measured along an axial direction (Z-Z), perpendicular to the main longitudinal direction (X-X) and to the transverse direction (Y-Y).

7. Modular leaf or door (4) according to any one of claims 1 to 6, wherein the crosspieces (48) are fixed to the modules (8) by mechanical coupling means (60) such as screws, bolts or rivets, wherein the leaf or door (4) comprises a cover casing (64) of said mechanical coupling means (60).

8. Modular leaf or door (4) according to any one of claims 1 to 7, wherein at least one of said modules (8) is provided with hinges (68) defining a longitudinal hinge axis, parallel to said main longitudinal direction (X-X).

9. Modular leaf or door (4) according to any one of claims 1 to 8, wherein said modules (8) are hollow elements provided with pairs of panels (10) connected by spacer ribs (11) directed along the main longitudinal direction (X-X).

10. Assembly method of a modular leaf or door (4) for a load compartment of an industrial vehicle, comprising the steps of:
- arranging a plurality of modules (8) extending along a main longitudinal direction (X-X), between opposite longitudinal ends (12),
- said modules (8) being provided with head profiles (16) at least partially counter-shaped to each other, wherein at least one head profile (16') of a first module (8') comprises a pair of cantilevered flaps (20), mutually facing each other with respect to a transverse direction (Y-Y) perpendicular to said main longitudinal direction (X-X) so as to delimit an attachment volume (24), and wherein at least one head profile (16") of a second module (8"), adjacent to the first module (8') along said transverse direction (Y-Y), comprises a male portion (28) adapted to engage in said attachment volume (24),
- wherein at least one of said cantilevered flaps (20) comprises a first fixing portion (32) having a plurality of ridges (36) and grooves (40) and facing said attachment volume (24), and wherein said male portion (28) comprises a second fixing portion (44), facing the first fixing portion (32) and adapted to obtain a shape coupling with said first fixing portion (32),
- engaging the male portion (28) inside the attachment volume (24), so as to obtain said shape coupling between the first fixing portion (32) and the second fixing portion (44),
- associating a pair of crosspieces (48), arranged along the transverse direction (Y-Y), at said longitudinal ends (12) and mechanically fixing them to said modules (8).

11. Assembly method of a modular leaf or door (4) according to claim 10, wherein the engagement step of the male portion (28) inside the attachment volume (24), is obtained by approaching two modules (8',8") parallel to said main longitudinal direction (X-X), inserting the male portion (28) from the side of a longitudinal end (12) of the module (8) delimiting the attachment volume (24) .

12. Assembly method of a modular leaf or door according to claim 10, wherein the coupling step of the male portion (28) inside the attachment volume (24), is obtained by approaching two modules (8',8") parallel to said transverse direction (Y-Y).

13. Assembly method of a modular leaf or door (4) according to claim 10, 11 or 12, comprising the steps of arranging a modular leaf or door (4) according to any one of claims 1 to 9.

14. Assembly method of a modular leaf or door (4) according to claim 10, 11, 12 or 13, comprising the step of cutting said modules (8), as a function of the required height of the modular leaf or door (4), along the main longitudinal direction (X-X), before mechanically associating them with each other.

15. Assembly method of a modular leaf or door (4) according to claim 10, 11, 12, 13 or 14, comprising the step of associating a number of said modules (8), as a function of the overall required width of the modular leaf or door (4), along the transverse direction (Y-Y) and the step of cutting the crosspieces (48) to measure as a function of said overall width of the modular leaf or door (4).
